# EUROPÄISCHE PATENTANMELDUNG

(11) **EP 0 627 269 A1**
(43) Veröffentlichungstag der Anmeldung: **07.12.1994**
(21) Anmeldenummer: 93890112.1
(22) Anmeldetag: 01.06.1993
(51) Int. Cl.: B09B 3/00, C02F 11/00, C02F 9/00

(54) **Verfahren zum Aufbereiten verunreinigter Böden, Schlämme od.dgl.**

(71) Anmelder: ECO-TECH UMWELTTECHNOLOGIE GmbH, A-4810 Gmunden (AT)
(72) Erfinder: Klammer, Josef, A-4810 Gmunden (AT)
(74) Vertreter: Hübscher, Heiner, Dipl.-Ing.

(57) **Zusammenfassung**

Bei einem Verfahren zum Aufbereiten verunreinigter Böden, Schlämme od. dgl. werden die aufzubereitenden Materialien mit Wasser versetzt und die im Wasser enthaltenen Verunreinigungen abgeschieden.

Um ein besonders rationelles und wirkungsvolles Aufbereiten sicherzustellen, wird das Material in einem Waschkreislauf mit Wasser aufgeschlossen und fraktionsweise ausgetragen, wobei die Fraktionen entsprechend der Körnung ihrer Feststoffteile jeweils für sich weiterbehandelt werden und das teilchenfreie Waschwasser nach der Abtrennung der Schadstoffe rückgeführt wird.

## Beschreibung

Die Erfindung bezieht sich auf ein Verfahren zum Aufbereiten verunreinigter Böden, Schlämme od. dgl., bei dem das aufzubereitende Material, gegebenenfalls nach einer Vorbehandlung, wie Zerkleinerung od. dgl., mit Wasser versetzt und dann die im Wasser enthaltenen Verunreinigungen abgeschieden werden.

Die bekannten Aufbereitungsverfahren kontaminierter Materialien sind bisher auf ganz bestimmte Verunreinigungen ausgelegt, insbesondere zum Abscheiden von Schwermetallen aus Klärschlämmen u. dgl., wozu aufwendige Filtrierungssysteme oder Flotationsprozesse notwendig sind, bei denen meist das gesamte Eintragsmaterial gleichermaßen behandelt wird, was trotz Anlagenaufwand und energieintensivem Betrieb hinsichtlich einer allgemeinen Dekontamination unbefriedigende Ergebnisse liefert und beträchtliche Mengen deponiepflichtiger Reststoffe als Nebenprodukt hinterläßt.

Der Erfindung liegt daher die Aufgabe zugrunde, diese Mängel zu beseitigen und ein Verfahren der eingangs geschilderten Art anzugeben, das auf rationelle Weise verschiedenste Abfallarten so aufzubereiten erlaubt, daß generell keine deponiepflichtigen Reststoffe oder Restkonzentrate verbleiben, die Prozeßhilfsstoffe rückgewonnen werden können und eine wirtschaftliche Stoffverwertung ermöglicht wird.

Die Erfindung löst diese Aufgabe dadurch, daß das Material in einem Waschkreislauf mit Wasser aufgeschlossen und fraktionsweise ausgetragen wird, wobei die Fraktionen entsprechend der Körnung ihrer Feststoffteile jeweils für sich weiterbehandelt werden und das teilchenfreie Waschwasser nach der Abtrennung der Schadstoffe rückgeführt wird. Durch dieses fraktionierte Austragen läßt sich die Behandlung des Materials jeweils auf die vorhandene Material-Schadstoffkombination speziell abstimmen, was eine wirtschaftliche und vor allem auch zielgerichtete Aufbereitung erlaubt. Je kleiner das Korn der Feststoffteile ist, um so größer wird die spezifische Oberfläche und um so höher muß daher auch die erforderliche Behandlungsintensität sein, so daß nun die einzelnen Fraktionen unter optimierbaren Einsatz-Wirkungsverhältnissen aufbereitet werden können. Außerdem ermöglicht die fraktionierte Austragung des Materials eine vollständige Abtrennung der Feststoffteile vom Waschwasser, so daß dann das teilchenfreie Waschwasser nach einer geeigneten Schadstoffentfernung rückgeführt und der Waschprozeß in einem geschlossenen Waschkreislauf durchführbar ist.

Vorteilhafte Ausgestaltungen des erfindungsgemäßen Verfahrens, insbesondere die Verfahrensschritte zum Reinigen des Waschwassers, zur Aufbereitung der einzelnen Materialfraktionen, zur Rückgewinnung der zur pH-Steuerung eingesetzten Hilfsstoffe und zur selektiven Rückgewinnung von Wertstoffen u. dgl., ergeben sich aus den Unteransprüchen.

Beim erfindungsgemäßen Kreislaufverfahren zur Aufbereitung von organisch und/oder anorganisch verunreinigten Böden, Schlämmen usw., werden die Schadstoffe durch Einstellen der Faktoren Mechanik, Temperatur und ph-Wert vom Ausgangsmaterial in die Trägermedien Wasser und Luft überführt, wobei diesen Trägermedien drei eigene Kreisläufe, nämlich der Waschkreislauf, der Behandlungswasser-Kreislauf und der Luftwäsche-Kreislauf, zugeordnet sind.

Im Waschkreislauf werden dem schadstoffangereicherten Waschwasser die Leichtflüssigkeiten physikalisch abgetrennt und die restlichen Organika in einer UV-Naßoxidation zu Kohlendioxid und Wasser mineralisiert und so das Waschwasser kreislaufgeeignet gemacht, wobei gegebenenfalls noch eine Entgiftung erfolgt.

Das Rohgas aus der Gesamtanlage wird kontinuierlich abgezogen und der Luftwäsche zugeführt, in der die Schadstoffe vom Trägermedium Luft wieder in das Trägermedium Wasser überführt werden, wobei das Kreislaufwasser der Luftwäsche ebenfalls kontinuierlich von Feinstoffen, Organika und Anorganika befreit wird.

Im Behandlungswasser-Kreislauf werden vom schadstoffangereicherten sauren Kreislaufwasser die Organika physikalisch abgetrennt, worauf eine Teilmenge in den Kreislauf zur Aufkonzentration zurückgeht und die andere Teilmenge selektiv weiterbehandelt wird. So werden dieser Teilmenge die Schwermetalle entzogen und in Metallfängern angereichert, welche Metallfänger eluiert und die Schwermetalle in den Eluaten aufkonzentriert werden. Aus diesem Konzentrat werden dann in der nachgeschalteten Werkstoffaufbereitung die Metalle selektiv gewonnen. Nach den Schwermetallen werden der Teilmenge in Ionentauschern die Anionen entzogen, angereichert und eluiert, wobei aus dem Eluat das prozeßwichtige Anion selektiv rückgewonnen wird. Aus diesem Anion werden mittels bipolarer Membrantechnologie die für die pH-Steuerung eingesetzten Hilfsstoffe, das sind Säure und Lauge, rückgewonnen. Als Säure eignen sich beispielsweise Salpetersäure, Salzsäure oder Schwefelsäure, als Lauge Natronlauge, Kalilauge oder Kalkmilch und als Anion und selektive Anionenfänger können Nitrat, Chlorid oder Sulfat mit bestem Ergebnis eingesetzt werden.

Das von den Schadstoffen befreite Material selbst wird nach der entsprechenden Ausscheidung und individuellen Weiterbehandlung sowie einer intensiven Klarwasserbebrausung vorzugsweise in drei Fraktionen ausgetragen, wobei das hier erforderliche Behandlungswasser und Waschwasser in die jeweiligen Kreisläufe eingebunden sind. Innerhalb dieser Kreisläufe wird das Wasser nach dem Gegenstromprinzip geführt, d. h., das gereinigte Wasser wird zuerst zur Bebrausung und dann erst für die Wäsche u. dgl. verwendet.

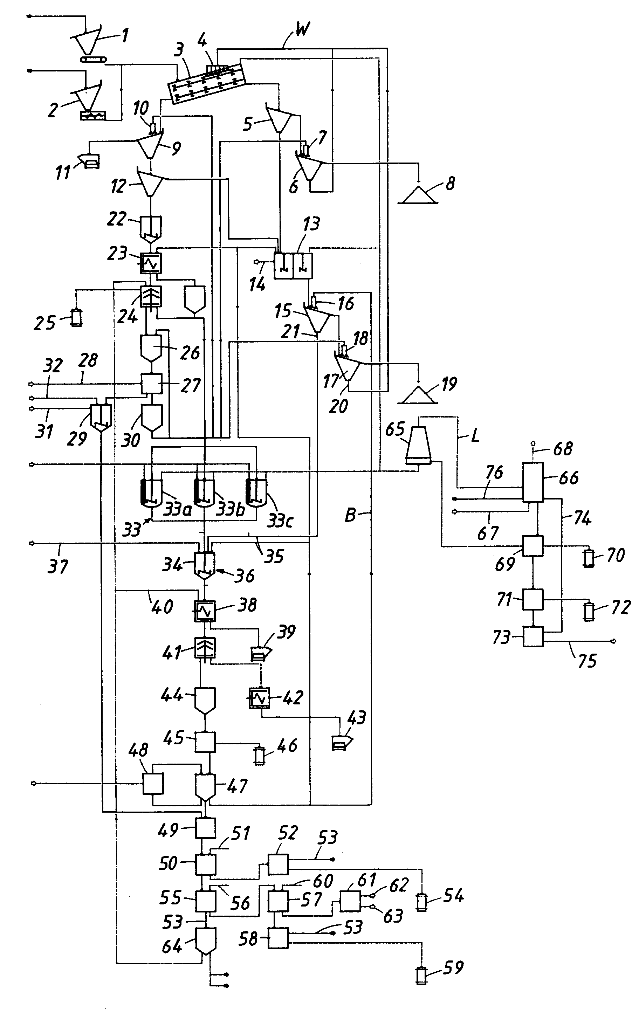

In der Zeichnung ist das erfindungsgemäße Aufbereitungsverfahren an Hand eines Fließschemas näher veranschaulicht:
Das aufzubereitende Material wird, erforderlichenfalls nach einer vorbereitenden Zerkleinerung oder Fraktionierung, je nach Körnigkeit über eine Aufgabestation 1 mit einem Abziehförderband oder eine Aufgabestation 2 mit einer Austragsschnecke in einen Waschkreislauf W eingebracht, wo es in einem Wäscher, beispielsweise einem Schwertwäscher 3, mit über eine Brauseeinrichtung 4 zugeführtem neutralem Waschwasser aufgeschlossen wird. Durch die drehenden Rührwerkzeuge des Wäschers 3 und gegebenenfalls durch eine Erwärmung des Waschwassers wird die Kontamination der grobkörnigen Fraktion, des Kieskorns, in die Waschsuspension übertragen, welches Kieskorn dann aus dem oberen Bereich des schräggeneigten Schwertwäschers 3 abgezogen und über Trennsiebe 5, 6 nach einer intensiven Bebrausung 7 in einen Bunker 8 ausgetragen wird.

Die Waschsuspension wird aus dem unteren Endbereich des Schwertwäschers 3 abgezogen und über ein Trennsieb 9, wo unter Bebrausung 10 Leichtgut, od. dgl. in einen Behälter 11 abgeschieden wird, zu einem feinmaschigen Trennsieb 12 zur Abtrennung feinkörniger Fraktionen, des Sandkornes, geleitet. Dieses Sandkorn wird mit der durch das Sieb 5 abgesiebten feinkörnigen Fraktion in eine Attritionsmaschine 13 gefördert, wo an den Feststoffteilchen anhaftende Kohlenwasserstoffe unter Entstehung von Reibungswärme abgetrennt werden. Außerdem kann Säure über eine Dosiereinrichtung 14 zudosiert werden, um durch Senken des pH-Wertes auch anorganische Schadstoffe herauszulösen. Die Suspension aus der Attritionsmaschine 13 gelangt auf ein erstes Sieb 15, wo eine Bebrausung 16 mit pH-eingestelltem Behandlungswasser erfolgt und dabei eventuell vorhandene Metallsalze od. dgl. abgespült werden und eine neuerliche Abtrennung des Sandkorns erfolgt, das dann in einem zweiten Sieb 17 über eine neutrale Bebrausung 18 gewaschen und in einen Bunker 19 ausgetragen wird. Der Unterlauf 20 aus dem zweiten Sieb 17 ist in den Waschkreislauf W eingebunden und der Unterlauf 21 des ersten Siebes 15 ist Teil eines separaten Behandlungswasser-Kreislaufes B.

Zur Abtrennung der feinstkörnigen Fraktion, des Schluff- und Tonkorns, wird die Waschsuspension nach dem Trennsieb 12 gegebenenfalls in einen Rührbehälter 22 und dann durch einen Dekanter 23 und einen Dreiphasenseparator 24 hindurch-geleitet, wobei in diesem Separator 24 neben dem Schluff- und Tonkorn einerseits und dem Waschwasser anderseits auch Leichtflüssigkeiten, z. B. Alkane, in einen entsprechenden Sammelbehälter 25 abgetrennt werden, so daß das verbleibende teilchenfreie neutrale Waschwasser aus dem Separator 24 über einen Zwischenbehälter 26 in eine UV-Naßoxidation 27 gelangt. Hier erfolgt die Mineralisierung der organischen Belastung mittels einer Wasserstoffperoxidzudosierung 28 und einer UV-Bestrahlung zu Kohlendioxid und Wasser.

Das Waschwasser wird dann erforderlichenfalls teilweise in einen Rührbehälter 29, in dem eine Cyanid-Entgiftung stattfindet, und teilweise in einen Stapelbehälter 30 für das Waschwasser gefördert, aus dem das Waschwasser im Waschkreislauf W rückgeführt wird. Die Cyanid-Entgiftung im Behälter 29 erfolgt durch Oxidation mit einer Zudosierung von Wasserstoffperoxid 31 und einer Zugabe eines Cyanidaktivators 32, wobei die Wasserstoffperoxid-Dosierung potentiometrisch gesteuert wird.

Das aus Dekanter 23 und Separator 24 abgeschiedene Schluff- und Tonkorn wird mit einem Trockensubstanzgehalt von ca. 50 Gew.% in eine Temperaturbehandlungsstufe 33 gebracht, wo die Suspension unter ständigem Rühren bei offenem System auf max. 95° C und bei geschlossenem System unter einem Druck bis zu 6 bar auf 100 - 160° C erwärmt wird, so daß entsprechend niedersiedende Schadstoffe, beispielsweise Benzol, an Luft als Trägermedium übergehen, die abgezogen und in einen Luftwäsche-Kreislauf L einbezogen wird. Um bei der Wärmebehandlung einen quasi-kontinuierlichen Betrieb zu erreichen, sind drei Behandlungsbehälter 33 a, b, c mit jeweils einem Rührwerk und einer dampfbeheizten Heizeinrichtung vorgesehen, von denen gleichzeitig jeweils einer befüllt, betrieben und entleert wird.

Nach der Wärmebehandlungsstufe 33 gelangt die Suspension in einen Rührbehälter 34, wo sie durch Zudosierung 35 von saurem Behandlungswasser, u. a. aus dem Unterlauf 21 des Siebes 16, auf einen Trockensubstanzgehalt eingestellt wird, der für eine spätere Fest-Flüssigtrennung mittels Zentrifuge geeignet ist, und der anderseits als Säurebehandlungsstufe 36, in der die Suspension durch Zudosierung von Säure 37 und ständiges Rühren so lange behandelt wird, bis die anorganischen Substanzen in das Behandlungswasser als Trägermedium überführt sind.

Nach der Säurebehandlungsstufe 36 wird das Schluffkorn über einen Dekanter 38 aus der Waschsuspension abgetrennt und in einen Container 39 ausgetragen, wobei der Dekanter 38 mit einer integrierten Gegenstrom-Waschvorrichtung 40 ausgestattet ist, um gleichzeitig mit dem Abtrennen des Schluffkorns das Auswaschen der sauren Mutterlauge zu erreichen, die sonst in einem eigenen Verfahrensschritt zu erfolgen hätte.

Nach dem Dekanter 38 wird das Tonkorn über einen 2-Phasen-Separator 41 aus der Waschsuspension abgetrennt und nach einer Entwässerung in einem nachgeschlteten Dekanter 42 in einen Container 43 ausgetragen. Dadurch ist es möglich, die Tonfraktion, die die größte Oberflächenaktivität aufweist und daher mit Schadstoffen, wie PCBs (polychlorierte Biphenyle) od. dgl., eine so feste Verbindung eingeht, daß diese sich einer Extraktion entziehen, gezielt abzutrennen und einer geeigneten Behandlung, beispielsweise durch Hochtemperaturverbrennung, zuzuführen.

Dem Separator 41 wird nun teilchenfreies, saures Behandlungswasser entnommen und über einen Zwischenbehälter 44 einem Koaleszenzabscheider 45 zugeführt, in dem vorhandene Organika physikalisch abgetrennt werden. Ein Koaleszenzabscheider ist z. B. ein Platten-Phasentrenner, bei dem Gravitations- und Koaleszenzeffekte zum Ausscheiden der diskontinuierlichen Phase eines Flüssigkeitsgemisches herangezogen werden. Die aus dem Koaleszenzabscheider 45 abgeschiedenes Organika gelangen in einen Sammelbehälter 46.

Nach dem Koaleszenzanscheider 45 wird das saure Behandlungswasser in einem Stapelbehälter 47 gesammelt, wobei über eine angeschlossene UV-Naßoxidation 48 eventuell noch vorhandene Organika mineralisiert werden. Aus dem Stapelbehälter 47 wird dann eine Teilmenge in den Behandlungswasser-Kreislauf B zurückgeführt und die andere Teilmenge wird für eine selektive Weiterbehandlung vorbereitet, indem sie durch ein Aktivkohlefilter 49 zum Schutz für die nachfolgenden Ionentauscher geleitet wird, um eventuell noch vorhandene organische Belastungen auszufiltern. In dieses Aktivkohlefilter mündet auch die Ableitung aus dem Rührbehälter 29 für die Cyanid-Entgiftung.

Nun werden in einem ersten Schritt über einen Ionentauscher (Kationen-Austauscher) 50 Schwermetalle angereichert und gespeichert, welcher Ionentauscher 50 mit Säure 51 eluiert und das Eluat einer Umkehrosmose 52 zugeführt wird. Durch diese Umkehrosmose ergibt sich eine Entsalzung auf rein physikalischem Wege mittels halbdurchlässiger Membranen, wobei Reinwasser 53 entsteht und das Schwermetallkonzentrat in einen Sammelbehälter 54 zur Wertstoffaufbereitung abgeleitet wird.

Im nachfolgenden Schritt gelangt das saure Behandlungswasser in einen Ionentauscher 55 (Anionen-Austauscher), durch den dem Behandlungswasser Anionen entzogen werden. Dieser Ionentauscher 55 wird mit Lauge 56 eluiert und das Eluat einem selektiven Anionentauscher als Anionenfänger 57 zugeführt. Die verbleibenden sonstigen Anionen werden durch Umkehrosmose 58 aufkonzentriert, wobei das Reinwasser 53 weiterverwendet und das Salzkonzentrat in einen Weiterbehandlungsbehälter 59 abgeführt wird. Das Anion aus dem Anionenfänger 57 wird mittels Natriumanion 60 eluiert und das Eluat durch eine Elektrodialyse 61 wieder in Säure 62 und Lauge 63 abgebaut. Das dem Ionentauscher 55 entfließende Reinwasser 53 gelangt wie das Reinwasser 53 aus der Umkehrosmose 52 oder 58 in einen Stapelbehälter 64, von wo es anlagenintern, beispielsweise zur Bebrausung 40 des Dekanters 38, als Kesselspeisewasser od. dgl. weiterverwendet wird.

Die gesamte Anlage ist im Prinzip als kreislaufgeschlossenes System ausgeführt, aus der das schadstoffbeladene Rohgas kontinuierlich abgesaugt und in den Luftwäsche-Kreislauf L eingebracht wird, wobei beispielsweise Zuleitungen vom Schwertwäscher 3, von der Attritionsmaschine 13 und von der Wärmebehandlungsstufe 32 vorgesehen sind. Die Rohgaszuleitung führt über eine Kühlfalle 65 zum eigentlichen Luftwäscher 66, in dem die Schadstoffe durch Waschen mit Wasser, das gegebenenfalls durch Lauge 67 aus der Elektrodialyse 61 versetzt wird, vom Trägermedium Luft in das Trägermedium Wasser überführt werden, so daß Reingas 68 an die Atmosphäre abgegeben wird. Das Waschwasser kommt in einen Plattenphasentrenner 69, mit dem Feinstoffe in einen Sammelbehälter 70 abgeschieden werden, und gelangt dann in eine Ultrafiltration 71, in der durch Membrantechnik das Trennen von Substanzen verschiedener Molekülgrößen möglich ist. Durch diese Ultrafiltration lassen sich Organika aus dem Waschwasser abtrennen und in einen Sammelbehälter 72 einleiten, worauf das Waschwasser in eine Umkehrosmose 73 zur Abtrennung von Anorganika gelangt, aus der das Reinwasser in einer Rückleitung 74 zum Luftwäscher 66 rückgeführt wird und das Konzentrat 75 in den Behandlungswasser-Kreislauf B eingeleitet wird. Zur Ergänzung der Wasserfehlmenge wird dem Luftwäscher 66 bedarfsweise Frischwasser 76 zugeleitet.

Das erfindungsgemäße Verfahren zeichnet sich durch den fraktionierten Austrag des aufzubereitenden Materials und der damit verbundenen Möglichkeit der kornspezifischen Behandlungsintensität, die gezielte Behandlung durch entsprechende Kombination von Mechanik, Wärme und pH-Wert, die konsequente Trennung von neutralem und pH-eingestelltem Waschwasser, durch die jeweilige Gegenstromführung der Wasserkreisläufe, die konsequente Fest-Flüssigtrennung der Waschsuspension vor der eigentlichen Wasserbehandlung, durch die stufenweise Entnahme der Organika über Dichteunterschiede, Mineralisierung mittels UV-Naßoxidation, Ultrafiltration und Aktivkohle, durch die selektive Entnahme von Kationen und Anionen mittels Ionentauschern und durch die Aufkonzentration mittels Umkehrosmose und anschließender Selektivgewinnung der Metalle, die Verwendung von Säure und Lauge für die Steuerung des ph-Wertes und die Rückgewinnung dieser Stoffe aus Natriumanion sowie durch die geschlossene Systemführung aus.

## Patentansprüche

1. Verfahren zum Aufbereiten verunreinigter Böden, Schlämme od. dgl., bei dem das aufzubereitende Material, gegebenenfalls nach einer Vorbehandlung, wie Zerkleinerung od. dgl., mit Wasser versetzt wird und dann die im Wasser enthaltenen Verunreinigungen abgeschieden werden, dadurch gekennzeichnet, daß das Material in einem Waschkreislauf mit Wasser aufgeschlossen und fraktionsweise ausgetragen wird, wobei die Fraktionen entsprechend der Körnung ihrer Feststoffteile jeweils für sich weiterbehandelt werden und das teilchenfreie Waschwasser nach der Abtrennung der Schadstoffe rückgeführt wird.

2. Verfahren nach Anspruch 1, dadurch gekennzeichnet, daß aus dem Waschwasser zuerst Leichtflüssigkeiten, wie Alkane od. dgl., physikalisch abgetrennt und dann die restlichen Organika in einer UV-Naßoxidation zu Kohlendioxid und Wasser mineralisiert werden.

3. Verfahren nach Anspruch 1 oder 2, dadurch gekennzeichnet, daß das Waschwasser in einem dampfbeheizten Rührwerksbehälter zur Cyanidentgiftung und Wasserstoffperoxid (H₂O₂) und einem CN-Aktivator versetzt und abschließend der pH-Wert auf pH=7 durch Zudosierung von Säure (H⁺) und/oder Lauge (OH⁻) eingestellt wird.

4. Verfahren nach einem der Ansprüche 1 bis 3, dadurch gekennzeichnet, daß das Kieskorn (grobkörnige Fraktion) nach dem Trennen von der Waschsuspension mit rückgeführtem, gereinigtem Waschwasser bebraust wird.

5. Verfahren nach einem der Ansprüche 1 bis 4, dadurch gekennzeichnet, daß das Material in einem Schwertwäscher mit schrägliegender Drehachse aufgeschlossen wird, wobei das Kieskorn am oberen Wäscherende und die übrige Waschsuspension am unteren Wäscherende abgezogen werden.

6. Verfahren nach einem der Ansprüche 1 bis 5, dadurch gekennzeichnet, daß das Sandkorn (feinkörnige Fraktionen) nach dem Aussieben aus der Waschsuspension in einer Attritionsmaschine von den anhaftenden Kohlenwasserstoffen und gegebenenfalls durch Senken des pH-Wertes, insbesondere durch Zudosierung von Säure, auch von anorganischen Schadstoffen befreit wird, worauf Feststoff und Lösung auf einem ersten Sieb mit pH-eingestelltem Wasser gewaschen werden und das durch das erste Sieb wieder abgetrennte Sandkorn auf einem zweiten Sieb mit neutralem Wasser gewaschen und ausgetragen wird.

7. Verfahren nach einem der Ansprüche 1 bis 6, dadurch gekennzeichnet, daß das Schluff- und Tonkorn (feinstkörnige Fraktionen) nach der Abscheidung aus der Waschsuspension mit einem Trockensubstanzgehalt von ca. 50 Gew.% zum Ausdampfen von Schadstoffen unter ständigem Rühren erhitzt wird.

8. Verfahren nach Anspruch 7, dadurch gekennzeichnet, daß die Suspension nach oder gleichzeitig mit der Wärmebehandlung einer Säurebehandlung unterworfen wird, bei der durch Zugabe von Säure der pH-Wert auf den erforderlichen Wert eingestellt und die Suspension so lange gerührt wird, bis die anorganischen Substanzen an das Wasser als Trägermedium überführt sind, worauf das Schluff- und Tonkorn aus der Suspension auszentrifugiert wird.

9. Verfahren nach Anspruch 7 oder 8, dadurch gekennzeichnet, daß die Wärme- und/oder Säurebehandlung jeweils in drei parallelgeschalteten Behandlungsbehältern durchgeführt werden, wobei von den Behältern gleichzeitig je einer betrieben, befüllt und entleert wird.

10. Verfahren nach Anspruch 8, dadurch gekennzeichnet, daß das Tonkorn selektiv vorzugsweise über Seperator und Dekanter ausgetragen und einer eigenen Weiterbehandlung, beispielsweise einer Hochtemperaturverbrennung, zugeführt wird.

11. Verfahren nach einem der Ansprüche 7 bis 10, dadurch gekennzeichnet, daß aus dem teilchenfreien Behandlungswasser nach dem Zentrifugieren od. dgl. Organika physikalisch abgetrennt werden, worauf eine Teilmenge dieses Wassers zur pH-Einstellung der Suspension rückgeführt und die andere Teilmenge zum Entziehen von Schwermetallen und Anionen weiterbehandelt werden.

12. Verfahren nach Anspruch 11, dadurch gekennzeichnet, daß die Organika durch physikalische Abtrennung ausgeschieden werden.

13. Verfahren nach Anspruch 11, dadurch gekennzeichnet, daß die Schwermetalle dem Behandlungswasser durch Ionentauscher entzogen werden, worauf das Eluat der eluierten Ionentauscher mittels Umkehrosmose aufkonzentriert und das erhaltene Konzentrat zur selektiven Metallrückgewinnung weiter aufbereitet wird.

14. Verfahren nach Anspruch 11, dadurch gekennzeichnet, daß die Anionen dem Behandlungswasser durch Ionentauscher entzogen werden, worauf aus dem Eluat der eluierten Ionentauscher das Anion selektiv gewonnen und dann durch Elektrodialyse zu Säure und Lauge abgebaut wird.

15. Verfahren nach einem der Ansprüche 1 bis 14, dadurch gekennezeichnet, daß bei den Behandlungsschritten entstehendes schadstoffbeladenes Rohgas kontinuierlich mit Luft als Trägermedium abgesaugt und einem Luftwäscher zugeführt wird, in dem die Schadstoffe ausgewaschen werden und das Wasser nach einem Entfernen von Feinstoffen, Organika und Anorganika durch physikalische Abtrennung, Ultrafiltration und Umkehrosmose im Kreislauf rückgeführt wird.

16. Verfahren nach einem der Ansprüch 1 bis 15, dadurch gekennzeichnet, das als Säure Salpetersäure (HNO₃), Salzsäure (Ha) oder Schwefelsäure (H₂SO₄) und als Lauge Natronlauge (NaOH), Kalilauge (KOH) oder Kalkmilch (Ca(OH)₂) und als Anion Nitrat (NO₃), Chlorid (Cl) oder Sulfat (SO₄) eingesetzt werden.
